# EUROPEAN PATENT SPECIFICATION

(11) **EP 0 933 395 B1**
(45) Date of publication and mention of the grant of the patent: **22.12.2004**
(21) Application number: 99300223.7
(22) Date of filing: 14.01.1999
(51) Int. Cl.: C08L 67/02, C08L 69/00

(54) **Polyester molding composition**
Polyesterformmasse
Composition de moulage à base de polyester

(30) Priority: 28.01.1998 US 14828
(43) Date of publication of application: 04.08.1999
(73) Proprietor: GENERAL ELECTRIC COMPANY, Schenectady, NY 12345 (US)
(72) Inventor: Chisholm, Bret Ja, Mount Vernon, Indiana 47620 (US)
(74) Representative: Szary, Anne Catherine, Dr.

(56) References cited:
- WO-A-85/02622
- FR-A- 2 223 424
- US-A- 4 555 540
- US-A- 5 674 928
- CHEMICAL ABSTRACTS, vol. 84, no. 10, 8 March 1976 (1976-03-08) Columbus, Ohio, US; abstract no. 60505, XP002114159 & JP 50 067355 A (TEIJIN, LTD.) 6 June 1975 (1975-06-06)
- CHEMICAL ABSTRACTS, vol. 121, no. 24, 12 December 1994 (1994-12-12) Columbus, Ohio, US; abstract no. 281941, XP002114160 & JP 06 166804 A (TEIJIN LTD.) 14 June 1994 (1994-06-14)
- "POLY(ETHYLENE NAPHTHALENEDICARBOXYLATE)/POLYARYLATE BLENDS" RESEARCH DISCLOSURE, no. 284, 1 December 1987 (1987-12-01), page 763/764 XP000027645 ISSN: 0374-4353
- DATABASE WPI Section Ch, Week 8650 Derwent Publications Ltd., London, GB; Class A23, AN 86-328907 XP002114161 & JP 61 245309 A (UNITIKA LTD), 31 October 1986 (1986-10-31)
- "POLY(ETHYLENE NAPHTHALENEDICARBOXYLATE)/POLYCARBONATE BLENDS" RESEARCH DISCLOSURE, no. 283, 1 November 1987 (1987-11-01), pages 667-669, XP000027627 ISSN: 0374-4353

## Description

The invention relates to blends of polyester resin.

Polycarbonate (PC) blends with aromatic crystalline polyesters are well known and are useful for their combination of processability, solvent resistance and impact strength. In most cases these blends also give good, uniform surface appearance. The thermal properties of these blends, especially under load, is a function of the glass transition temperature (Tg) of the polycarbonate-rich phase. To the extent that the polycarbonate is partially miscible with the polyester, the PC Tg of the blend will be reduced relative to pure PC [ref. *J. Applied Polymer Sci.* 48, 2249 (1993)]. This will cause a drop in thermal properties like Heat Distortion Under Load (HDT).

If one tries to address the drop in blend Tg by use of a higher Tg polycarbonate resin there may still be problems. Polyarylates and the related polyester carbonate (PEC) resins are known to have some of the properties of polycarbonate with higher Tgs (see US 4,430,484). However, when these polyarylates or polyester carbonates are mixed with standard alkyl terephthalate base polyesters, like polybutylene terephthalate (PBT), there is little if any gain in HDT vs. the standard, lower Tg PC blends. The higher Tg polyester carbonates and polyarylates are more miscible with the alkyl terephthalate resins and the resultant Tg of the blend is about the same or lower than an analogous PC-alkyl terephthalate blend.

Another way to try to address the loss of thermal properties in polyester-polycarbonate blends is to use a crystalline polyester that has a higher Tg than the standard polyalkylene terephthalates, polyethylene terephthalate (PET) and PBT PC [ref. Research Disclosure, Nov. 1987, p667-669]. Higher Tg crystalline polyesters have recently become commercially available as alkyl naphthanoate polyester resins like polyethylene naphthanoate (PEN) or polybutylene naphthanoate (PBN). Unfortunately, these naphthanoate polyester resins when blended with polycarbonate give molded parts with poor appearance showing a poorly dispersed, non uniform, pearlescent surface.

Thus, PC-polyester blends with higher heat capability and good appearance and good mechanical properties are difficult to achieve. Hence, it is desired to have a polycarbonate/polyester blend with a combination of properties including increased Tg, high impact strength, higher Heat Distortion Temperature (HDT) as well as uniform appearance .

### SUMMARY OF THE INVENTION

It is well known to those skilled in the art, that the area of modification of the physical properties of a polymer by the addition of various additives or other polymers thereto is largely an empirical art rather than a predictable science with little, if any, predictability on the effects a particular additive will have in a particular polymer. Surprisingly, we have found that blending the alkyl naphthanoate polyesters with polyester carbonates give blends which solve the issues of appearance and lower Tg. Instead of getting the expected low Tg blend with poor appearance, the polyalkylene naphthanoate with polyester carbonate resin gives blends with a fine dispersion and excellent appearance. In addition, the blends show reduced miscibility compared to a standard alkyl terephthalate polyester-polyester carbonate blends and have higher Tgs with improved thermal properties, such as HDT.

This specific combination of polyester carbonate or polyarylate resins with polyalkylene naphthanoate polyesters solves both the problems of appearance and thermal properties while still maintaining the benefits of solvent resistance, processability, stiffness and impact strength.

It is also important to prevent reaction between the polynaphthanoates and polyester carbonates/ polyarylates during melt processing, since such reaction will lead to copolymer formation and a degradation of thermal properties, as well as the creation of color and undesirable processing effects such as gas generation. Use of specific acidic phosphorus species is desirable to prevent melt reaction of the blended polymers.

In accordance with the present invention, there is provided a thermoplastic resin having enhanced combination of properties including increased glass transition, higher Heat Distortion Temperature (HDT) as well as uniform appearance and good melt stability compromising:
a) 90 to 10 weight percent of a polyester naphthanoate containing recurring units of the formula I: 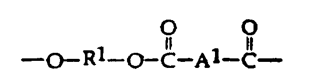 wherein each R¹ is independently a divalent aliphatic hydrocarbon, alicyclic hydrocarbon, polyoxyalkylene radical, or mixtures thereof and each A¹ is independently a divalent naphthalene radical, or mixtures thereof;
b) 10 to 90 weight percent of an essentially amorphous polymer containing recurring units of the formula II: 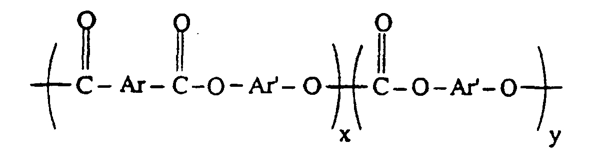 wherein Ar is divalent aromatic residue of a dicarboxylic acid or mixture of dicarboxylic acids and Ar' is the divalent aromatic residue of a dihydric phenol or mixture of dihydric phenols and x and y are relative weight percentages of the ester and carbonate units, wherein x is from 20 to 100 and y is from 0 to 80; and
c) a quencher selected from the group consisting of phosphites having at least one acidic hydrogen, acidic phosphate salts, polyacid pyrophosphates, phosphates of Group IB and Group IIB metals, and phosphorus oxo-acids.

It has further been found that when a portion of standard aromatic polycarbonate (Formula II where x = 0) is added to the polyester carbonate-alkyl naphthanoate polyester blends that thermal properties are enhanced beyond that of either amorphous resin added to the naphthanoate polyester by itself.

In addition, by virtue of the polyester carbonate/ polyarylate resins, which photo react to produce a UV stable material (ref. *J Polymer Sci. Part A-1,* 9, 3263, 1971) these blends will also be expected to have improved retention of properties on outdoor aging vs. standard polycarbonate alkyl terephthalate blends.

### DETAILED DESCRIPTION OF PREFERRED EMBODIMENTS

The poly(ester-carbonate) resins, also commonly referred to as copolyester-polycarbonate resins, are copolymers of aromatic diphenols reacted with dicarboxylic acids and carbonic acid or their derivatives. A closely related resin family are commonly referred to as polyarylate resins where the carbonate linkages are absent producing an amorphous aromatic polyester derived from diphenols and aromatic diacids, or derivatives thereof. Both of these resin families will hereinafter be referred to as "PEC" used in the blends of the present invention. These polymers may be prepared by a variety of methods, for example by either melt polymerization or by interfacial polymerization. A discussion of Polyarylate resins and their synthesis is contained in chapter 10 p255-281 of *"Engineering Thermoplastics Properties and Applications"* edited by James M. Margolis, published by Marcel Dekker Inc. 1985

Melt polymerization methods to make PEC resins may involve co-reacting, for example, various mixtures of dihydric phenols and ester precursors such as, for example, diphenyl derivatives of iso- and terephthalates, and their mixtures. Diphenyl carbonate may be introduced to prepare polyester carbonate copolymers. Various catalysts or mixtures of catalysts such as, for example, lithium hydroxide and lithium stearate can also be used to accelerate the polymerization reactions.

In general, the method of interfacial polymerization comprises the reaction of a dihydric phenol with diacid or derivative ester precursor and optionally a carbonate precursor, in a two phase system with catalyst and often an acid acceptor when the dicarboxylic acid and carbonate precursors are diacid halides. Examples of interfacial polymerization techniques can be found in U.S. Patent Nos. 3,169,121 and 4,487,896.

Although the reaction conditions of the preparative processes may vary, several of the preferred processes typically involve dissolving or dispersing dihydric phenol reactants in aqueous caustic, combining the resulting mixture with a suitable water immiscible solvent medium and contacting the reactants with the carbonate precursor, such as, for example, phosgene, and diacids or derivatives, such as diacid chlorides, in the presence of a suitable catalyst and under controlled pH conditions. The most commonly used water immiscible solvents include methylene chloride, 1,2-dichloroethane, chlorobenzene and toluene.

Advantageously a catalyst may be added to the reaction mixture to promote the reaction. The catalyst typically accelerates the rate of polymerization of the dihydric phenol reactants with the carbonate/ester precursors. Representative catalysts include but are not limited to, for example, tertiary amines such as triethylamine, quaternary phosphonium compounds and quaternary ammonium compounds.

The preferred process for preparing polyester carbonate copolymers comprises a phosgenation reaction. The temperature at which the phosgenation reaction proceeds may vary from below about 0°C to about 100°C. The phosgenation reaction preferably proceeds at temperatures of from about room temperatures (about 23°C) to about 50°C. Since the reaction is exothermic, the rate of phosgene addition may be used to control the reaction temperature.

The dihydric phenols employed are known, and the reactive groups are thought to be the phenolic hydroxyl groups. Typical of some of the dihydric phenols employed are bis-phenols such as (4-hydroxyphenyl)methane, 2,2-bis(4-hydroxyphenyl)propane (also known as bisphenol-A), 2,2-bis(4-hydroxy-3,5-dibromo-phenyl)propane; dihydric phenol ethers such as bis(4-hydroxyphenyl)ether, bis(3,5-dichloro-4-hydroxyphenyl)ether; p,p'-dihydroxydiphenyl and 3,3'-dichloro-4,4'-dihydroxydiphenyl; dihydroxyaryl sulfones such as bis(4-hydroxyphenyl)sulfone, bis(3,5-dimethyl-4-hydroxyphenyl)sulfone, dihydroxy benzenes such as resorcinol, hydroquinone, halo- and alkyl-substituted dihydroxybenzenes such as 1,4-dihydroxy-2,5-dichlorobenzene, 1,4-dihydroxy-3-methylbenzene; and dihydroxydiphenyl sulfides and sulfoxides such as bis(4-hydroxyphenyl)sulfide, bis(4-hydroxy-phenyl)sulfoxide and bis(3,5-dibromo-4-hydroxy-phenyl)sulfoxide. A variety of additional dihydric phenols are available and are disclosed in U. S. Patent Nos. 2,999,835, 3,028,365 and 3,153,008. It is, of course, possible to employ two or more different dihydric phenols or a combination of a dihydric phenol with a glycol.

The carbonate precursors are typically a carbonyl halide, a diarylcarbonate, or a bishaloformate. The carbonyl halides include, for example, carbonyl bromide, carbonyl chloride, and mixtures thereof. The bishaloformates include the bishaloformates of dihydric phenols such as bischloroformates of 2,2-bis(4-hydroxy-3,5-dichlorophenyl)-propane, hydroquinone, or bishaloformates of glycol. While all of the above carbonate precursors are useful, carbonyl chloride, also known as phosgene, is preferred.

In general, any dicarboxylic acid conventionally used in the preparation of polyesters may be utilized in the preparation of poly(ester-carbonate) resins. However, the PEC used in the present invention are prepared with aromatic dicarboxylic acids, and in particular terephthalic acid, and mixtures thereof with isophthalic acid.

Rather than utilizing the dicarboxylic acid per se, it is possible, and sometimes even preferred, to employ various derivatives of the acid moiety. Illustrative of these reactive derivatives are the acid halides. The preferred acid halides are the acid dichlorides and the acid dibromides. Thus, for example instead of using terephthalic acid or mixtures thereof with isophthalic acid, it is possible to employ terephthaloyl dichloride, and mixtures thereof with isophthaloyl dichloride

In the conventional interfacial polymerization methods of preparing PEC, polycarbonates and polyarylates, a molecular weight regulator (a chain stopper) is generally added to the reaction mixture prior to or during the polymerization reactions with carbonate and/or ester precursors. Useful molecular weight regulators include, for example, monohydric phenols such as phenol, chroman-I, para-t-butylphenol and p-cumylphenol.

The proportions of reactants employed to prepare the PEC will vary in accordance with the proposed use of the blends of the invention containing this product resin. In general, the amount of the combined ester units may be from about 20% by weight to about 100% by weight, relative to the carbonate units, preferably about 40% to about 90% by weight relative to the carbonate units.

The preferred "PEC" used as an ingredient in the blends of the present invention preferably has a ester/carbonate units of formula II: 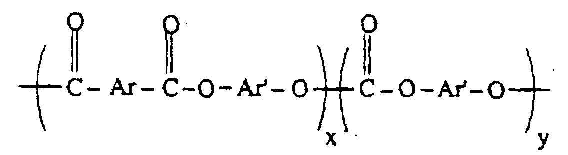 wherein Ar is divalent aromatic residue of a dicarboxylic acid or dicarboxylic acid mixture and Ar' is the divalent aromatic residue of a dihydric phenol or mixture of dihydric phenols.
Ar is an aryl group and most preferably the residue from iso- and terephthalate or mixtures thereof and has the formula

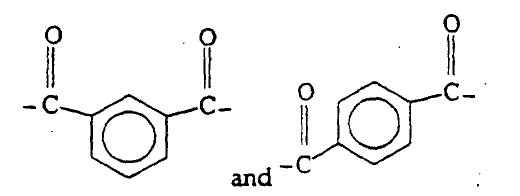

The divalent residue of dihydric phenols, Ar' may be represented by the general formula: 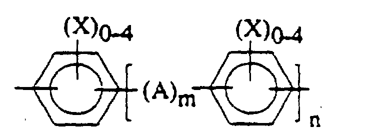 wherein A is a divalent hydrocarbon radical containing from 1 to about 15 carbon atoms or a substituted divalent hydrocarbon radical containing from 1 to about 15 carbon atoms and substituent groups such as halogen; -S-; - S(O)₂- or -O-; each X is independently selected from the group consisting of hydrogen, halogen, and a monovalent hydrocarbon radical such as an alkyl group of from 1 to about 8 carbon atoms, an aryl group of from 6 to about 18 carbon atoms, an aralkyl group of from 7 to about 14 carbon atoms, an alkoxy group of from 1 to about 8 carbon atoms; and m is 0 or 1 and n is an integer of from 0 to about 5. Ar' may be a single aromatic ring like hydroquinone or resorcinol, or a multiple aromatic ring like biphenol or bisphenol A.

In the preferred "PEC" resin of formula II, y, the carbonate content, is from 0 to about 80 and preferably from 5 to about 70 and x, the aromatic esters content, is about 20 to about 100 and preferably from about 30 to about 95. More preferably x is from 50 to about 95. In formula II x and y represent the respective weights of carbonate units and aromatic ester units based on 100 parts total weight. When y is 0, the carbonate linkages are absent and the polyester resin is known as a polyarylate.

In general, any dicarboxylic acid conventionally used in the preparation of polyesters may be utilized in the preparation of poly(estercarbonate) resins. However, the PEC used in the present invention are prepared with aromatic dicarboxylic acids, and in particular terephthalic acid, and mixtures thereof with isophthalic acid wherein the weight ratio of terephthalic acid to isophthalic acid is in the range of from about 5:95 to about 95:5

The preferred PEC for use as the ingredient (b) in the blends of the present invention are those derived from reaction of bisphenol-A and phosgene with iso- and terephthaloyl chloride and having an intrinsic viscosity of about 0.5 to about 0.65 deciliters per gram (measured in methylene chloride at a temperature of 25°C).

Blends of different polyarylates and polyestercarbonates may also be used in these compositions.

Polyester naphthanoates used for preparing the present compositions include those comprising structural units of the formula I: 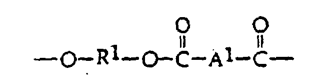 wherein each R¹ is independently a divalent aliphatic hydrocarbon, alicyclic hydrocarbon, polyoxyalkylene radical, or mixtures thereof and each A¹ is independently a divalent napthalene radical, or mixtures thereof. Examples of suitable polyesters containing the structure of formula I are poly(alkylene naphthanoates), elastomeric polyesters, liquid crystalline polyesters, and polyester copolymers. It is also possible to use a branched polyester in which a branching agent, for example, a glycol having three or more hydroxyl groups or a trifunctional or multifunctional carboxylic acid has been incorporated. Treatment of the polyester with a trifunctional or multifunctional epoxy compound, for example, triglycidyl isocyanurate can also be used to make a branched polyester. Furthermore, it is sometimes desirable to have various concentrations of acid and hydroxyl end groups on the polyester, depending on the ultimate end-use of the composition.

In some instances, it is desirable to reduce the number of acid end groups, typically to less than about 30 micro equivalents per gram, with the use of acid reactive species. In other instances, it is desirable that the polyester has a relatively high carboxylic end group concentration, e.g., about 5-250 micro equivalents per gram or, more preferable, about 20-70 micro equivalents per gram

The R¹ radical may be, for example, a C₂₋₁₀ alkylene radical, a C₆₋₁₀ alicyclic radical, or a polyoxyalkylene radical in which the alkylene groups contain about 2-6 and most often 2 or 4 carbon atoms. The A¹ radical in the above formula is most often a 1,4- or 2,6-naphthylene.

The poly(alkylene naphthanoates), for example, poly(ethylene naphthanoate), poly(cyclohexyldimethylene naphthanoate), poly(propylene naphthanoate) and poly(butylene naphthanoate) are the preferred polyesters for the present invention, with poly(ethylene naphthanoate) and poly (butylene naphthanoate) being the most preferred members. Various mixtures of the above poly(alkylene naphthanoates) may also be suitable.

Because of the tendency of polyesters to undergo hydrolytic degradation at the high extrusion and molding temperatures encountered by the compositions of this invention, it is preferred that the polyester be substantially free of water. The polyester may be predried before admixing with the other ingredients. More commonly, the polyester is used without predrying and the volatile materials are removed through the use of vacuum venting the extruder.

The polyesters generally have number average molecular weights in the range of about 20,000-100,000, as determined by gel permeation chromatography.

As previously mentioned, it has further been found that when a portion of standard aromatic polycarbonate is added to the polyester carbonate-alkyl naphthanoate polyester blends that thermal properties are further enhanced.

According to a preferred embodiment, it is desirable to include polycarbonate as an additional component with the above mentioned blend of poly(ester carbonate ) and polyester naphthanoate. Polycarbonate resins useful in preparing the blends of the present invention are generally aromatic polycarbonate resins.

Typically these are prepared by reacting a dihydric phenol with a carbonate precursor, such as phosgene, a haloformate or a carbonate ester. Generally speaking, such carbonate polymers may be typified as possessing recurring structural units of formula II where the ester content, x, is zero. Ar' is a divalent aromatic radical of the dihydric phenol as previously discussed which is employed in the polymer producing reaction.

These aromatic polycarbonates can be manufactured by known processes, such as, for example and as mentioned above, by reacting a dihydric phenol with a carbonate precursor, such as phosgene, in accordance with methods set forth in the above-cited literature and in U.S. Pat. No. 4,123,436, or by transesterification processes such as are disclosed in U.S. Pat. No. 3,153,008, as well as other processes known to those skilled in the art.

It is also possible to employ two or more different dihydric phenols or a copolymer of a dihydric phenol with a glycol or with a hydroxy- or acid-terminated polyester or with a dibasic acid or hydroxy acid in the event a carbonate copolymer or interpolymer rather than a homopolymer is desired for use in the preparation of the polycarbonate mixtures of the invention. Branched polycarbonates are also useful, such as are described in U.S. Pat. No. 4,001,184. Also, there can be utilized blends of linear polycarbonate and branched polycarbonate. Moreover, blends of any of the above materials may be employed in the practice of this invention to provide the aromatic polycarbonate.

In any event, the preferred aromatic carbonate for use in the practice in the present invention is a homopolymer, e.g., a homopolymer derived from 2,2-bis(4-hydroxyphenyl)propane (bisphenol-A) and phosgene, commercially available under the trade designation LEXAN Registered TM from General Electric Company.

The instant polycarbonates are preferably high molecular weight aromatic carbonate polymers having an intrinsic viscosity, as determined in chloroform at 25° C of from about 0.3 to about 1.5 dl/gm, preferably from about 0.45 to about 1.0 dl/gm. These polycarbonates may be branched or unbranched and generally will have a weight average molecular weight of from about 10,000 to about 200,000, preferably from about 20,000 to about 100,000 as measured by gel permeation chromatography.

All types of polycarbonate end groups are contemplated as being within the scope of the present invention.

The composition of the present invention may include additional components which do not interfere with the previously mentioned desirable properties. The composition may optionally contain impact modifiers such as a rubbery impact modifier. Preferably such impact modifiers are utilized in an amount less than about 30, and preferably less than about 20 percent, more preferably less than about 15 percent by weight based on the total weight of the composition. Typical impact modifiers are derived from one or more monomers selected from the group consisting of olefins, vinyl aromatic monomers, acrylic and alkylacrylic acids and their ester derivatives as well as conjugated dienes. Especially preferred impact modifiers are the rubbery high-molecular weight materials including natural and synthetic polymeric materials showing elasticity at room temperature. They include both homopolymers and copolymers, induding random, block, radial block, graft and core-shell copolymers as well as combinations thereof. Suitable modifiers include core-shell polymers built up from a rubber-like core on which one or more shells have been grafted. The core typically consists substantially of an acrylate rubber or a butadiene rubber. One or more shells typically are grafted on the core. The shell preferably comprises a vinylaromatic compound and/or a vinylcyanide and/or an alkyl(meth)acrylate. The core and/or the shell(s) often comprise multi-functional compounds which may act as a cross-linking agent and/ or as a grafting agent. These polymers are usually prepared in several stages.

Olefin-containing copolymers such as olefin acrylates and olefin diene terpolymers can also be used as impact modifiers in the present compositions. An example of an olefin acrylate copolymer impact modifier is ethylene ethylacrylate. Other higher olefin monomers can be employed in copolymers with alkyl acrylates. for example, propylene and n-butyl acrylate. The olefin diene terpolymers are well known in the art and generally fall into the EPDM (ethylene propylene diene) family of terpolymers. Polyolefins such as polyethylene, polyethylene copolymers with alpha olefins are also of use in these compositions. Polyolefin copolymers with gylcidyl acrylates or methacrylates may be especially effective in the impact modification of polyester containing blends.

Styrene-containing polymers can also be used as impact modifiers. Examples of such polymers are acrylonitrile-butadiene-styrene (ABS), acrylonitrile-butadiene-alpha-methylstyrene, styrene-butadiene, styrene butadiene styrene (SBS), styrene ethylene butylene styrene (SEBS), methacrylate-butadiene-styrene (MBS), and other high impact styrene-containing polymers.

Additionally, it may be desired to employ an inorganic filler to the thermoplastic resin to impart additional beneficial properties such as thermal stability, increased density, stiffness and texture. Typical inorganic fillers include: alumina, amorphous silica, alumino silicates, mica, feldspar, clays, talc, glass flake, glass fibers, glass microspheres, metal oxides such as titanium dioxide, zinc sulfide and ground quartz. Preferred inorganic fillers may provide a ceramic-like feel to articles formed from the resin composition. Preferred inorganic fillers which are employed in the present thermoplastic compositions include: barium sulfate and fiberglass.

The molding compositions may include from 0 to about 65% by weight, preferably from about 10 to about 50% by weight or most preferably from about 10 to about 40% by weight of total composition of an inorganic filler component. Fiber glass is the preferred filler.

In the thermoplastic compositions which contain a polyester resin and a PEC or polycarbonate resin, it is preferable to use a stabilizer or quencher material. Typically, such stabilizers are used at a level of 0.001-10 weight percent and preferably at a level of from 0.005-2 weight percent. The preferred stabilizers include an effective amount of an acidic phosphate salt; an acid, alkyl, aryl or mixed phosphite having at least one acidic hydrogen; a Group IB or Group IIB metal phosphate salt; a phosphorus oxo acid, a metal acid pyrophosphate or a mixture thereof. The suitability of a particular compound for use as a stabilizer and the determination of how much is to be used as a stabilizer may be readily determined by preparing a mixture of the polyester resin component, the PEC and optionally polycarbonate with and without the particular compound and determining the effect on melt viscosity, gas generation or color stability or the formation of interpolymer. The acidic phosphate salts include sodium dihydrogen phosphate, mono zinc phosphate, potassium hydrogen phosphate and calcium dihydrogen phosphate. The phosphites may be of the formula: 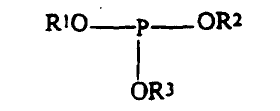 where R1, R2 and R3 are independently selected from the group consisting of hydrogen, alkyl and aryl with the proviso that at least one of R1, R2 and R3 is hydrogen.

The phosphate salts of a Group IB or Group IIB metal include zinc phosphate and copper phosphate. The phosphorus oxo acids include phosphorous acid, phosphoric acid, polyphosphoric acid or hypophosphorous acid.

The polyacid pyrophosphates may be of the formula:

M^{z}ₓH_{y}PₙO₃ₙ₊₁

wherein M is a metal, x is a number ranging from 1 to 12 and y is a number ranging 1 to 12, n is a number from 2 to 10, z is a number from 1 to 5 and the sum of (xz) + y is equal to n + 2. The preferred M is an alkaline or alkaline earth metal.

The preferred blend range is:

| | |
|---|---|
| Polyalkylene Naphthanoate | 10-90 wt. % |
| PEC | 90-10 wt. % |
| BPA-PC | 0-60 wt. % |
| Rubber | 0-25 wt. % |
| Glass or Mineral | 0-60 wt. % |
| Quencher/Stabilizer | 0.005-2.0 wt. % |

### EXAMPLES

The following examples illustrate the present invention, but are not meant to be limitations to the scope thereof.

Polymer blends constituting PEC and polyester napthanoate, and in some examples additions of polycarbonate were included, were prepared by melt mixing using a 30 mm twin screw extruder operating at 100 rpm and stock temperature of approximately 250° C. to 265° C. Injection molding of test specimens was completed at 260°C. melt temperature and mold temperature was 65°C. Pellets were dried for 2-4 h at 125 °C prior to molding.

Table I describes the raw materials used to produce the examples of the invention and reference materials.

Mechanical properties were measured using ASTM tests D256 (Izod impact), D638 (Tensile strength and elongation), D790 (Flexural strength and modulus), D3763 (biaxial or instrumented impact run using a Dynatup brand instrument) and D648 (heat distortion temperature). Ductile-brittle transition temperature (D/B temperature) was determined by measuring notched-Izod impact at different temperatures and determining at which temperature the fracture behavior changes from ductile to brittle. At temperatures below the D/B temperature, fracture behavior is brittle and crack propagation occurs with relatively little energy absorption, while at temperatures above the D/ B temperature, the material is ductile and crack propagation occurs with relatively large energy absorption. Dynamic mechanical analysis (DMA) on 3.175mm (1/8 in.) thick injection molded specimens was used to determine glass transition temperatures (Tgs) and, for some examples, to estimate HDT using the method of Takemori [*Polym. Eng. Sci.,* 19(15), 1104 (1979)]

Each entry in the tables to follow represents a single experiment. Thus, for each example in a given table, the extrusion conditions, molding conditions, testing conditions, etc. were identical. The materials designated "R1", "R2", etc. are reference materials while materials designated "E1", "E2", etc. are examples of the invention.

**Table I.**

| **Description of raw materials** | |
|---|---|
| Raw Material ID | Description |
| PBT | polybutylene terephtalate Mw=110,000°, VALOX 315 from GE Plastics |
| PET | polyethylene terephtalate IV=1,00, MELINAR 5922C from ICI Inc. |
| PBN | polybutylene-2,6-naphtalate IV=1.00 |
| PEN | polyethylene-2,6-naphtalate IV=1.68 MELINAR X-61 from ICI Inc. |
| PC-1 | bisphenol-A polycarbonate Mw=23,300 |
| PC-2 | bisphenol-A polycarbonate Mw=30,400 |
| PC-3 | bisphenol-A polycarbonate Mw=36,000 |
| PEC-1 | polyestercarbonate Mw=28,000, 80% ester, iso/tere 93/7 |
| PEC-2 | polyestercarbonate Mw=28,000, 60% ester, iso/tere 50/50 |
| MBS | methylmethacrylate-butadiene-styrene core shell impact modifier sold by Rohm and Haas under the tradename EXL2691 |
| PETS | pentaerythritol tetrastearate |
| Irganox 1076 | Hindered phenol antioxidant sold by Ciba as Irganox 1076 |
| Seenox 412S | Thioester antioxidant sold by Witco as Seenox 412S |
| H3PO3 | 45% aqueous solution of phosphorous acid (H3PO3) |
| Molecular weight by GPC Calculated using polystyrene standards. | |

Table II shows that replacement of BPA-PC in an impact modified PBT/PC blend by a higher Tg PEC results in a substantial drop in thermal properties as indicating by measuring the Tg of the PC or PEC-rich phase of the blends and the HDT (compare R1 to R2 and R3). In contrast, replacement of PC in an impact modified PBN/PC blend bv PEC results in an increase in the blend Tg (Tg of the PC/PEC-rich phase) and a higher HDT at 455kPa (66 psi). In addition, while the PBN/ PC blend (R4) possesses an undesirable, pearlescent appearance, the PBN/PEC blends (E1 and E2), surprisingly, show a uniform appearance. Thus, PBN/PEC blends possess significantly better thermal properties as compared to analogous PBT/ PEC blends and significantly better appearance than PBN/ PC blends.

**Table II.**

| **PBN/PEC blend properties.** | | | | | | |
|---|---|---|---|---|---|---|
| Raw Mtrls | R1 | R2 | R3 | R4 | E1 | E2 |
| PBT | 42.40 | 42.40 | 42.40 | ---- | ---- | ---- |
| PBN | ---- | ---- | ---- | 42.40 | 42.40 | 42.40 |
| PC-1 | 45.87 | ---- | ---- | 45.87 | ---- | ---- |
| PEC-1 | ---- | 45.87 | ---- | ---- | 45.87 | ---- |
| PEC-2 | ---- | ---- | 45.87 | ---- | ---- | 45.87 |
| MBS | 11.00 | 11.00 | 11.00 | 11.00 | 11.00 | 11.00 |
| Stabilizers* | 0.73 | 0.73 | 0.73 | 0.73 | 0.73 | 0.73 |
| | | | | | | |

| Properties | | | | | | |
|---|---|---|---|---|---|---|
| Tg**(°C) | 124 | 101 | 96 | 141 | 161 | 157 |
| HDT @ (264 psi) (°C) 1820 kPa | 83 | 63 | 62 | 106 | 101 | 100 |
| HDT @ (66 psi) (°C) 455 kPa | 102 | 73 | 68 | 125 | 133 | 131 |
| D/B temperature (°C) | -40 | -47 | < -47 | -40 | -35 | -43 |
| Stress @ yield (psi) kPa | (7300) 50332 | (7200) 49642 | (7100) 48953 | (7400) 51021 | (8000) 55158 | (7900) 54469 |
| Stress @ break (psi) kPa | (7500) 51711 | (7500) 51711 | (7800) 53779 | (6900) 47574 | (9000) 62053 | (9100) 62742 |
| Tensile Elongation (%) | 178 | 154 | 146 | 84 | 115 | 108 |

| | | | | | | |
|---|---|---|---|---|---|---|
| *0.30 wt. % PETS, 0.30 wt. % Irganox 1076, 0.05 wt. % Seenox 412S, 0.08 wt. % phosphorous acid | | | | | | |
| **Tg of PC or PEC-rich phase. | | | | | | |

Table III shows that blending PC with PBN (R6) results in a material with good thermo-mechanical properties (high HDT), but the material has an undesirable pearlescent appearance. For blends E3 - E6, displacing an increasing amount of PC by PEC results in an increasing improvement in the appearance of the material while with the good thermo-mechanical properties and impact properties being maintained. It is surprising that the thermo-mechanical properties of E3 - E6 do not vary linearly with PEC content between that of R6 and E7. E3 - E6 possess thermo-mechanical properties significantly better than E7. In addition, the appearance of E3 - E6 is better than R6 with the magnitude of improvement increasing with increasing PEC content. For E4 and E5, pearlescence was barely detectable, and for E6 and E7 no pearlescence was observed.

**Table III.**

| **PBN/PC/PEC ternary blends** | | | | | | | |
|---|---|---|---|---|---|---|---|
| Raw Materials | R5 | R6 | E3 | E4 | E5 | E6 | E7 |
| PBT | 39.30 | ---- | ---- | ---- | ---- | ---- | ---- |
| PBN | ---- | 39.30 | 39.30 | 39.30 | 39.30 | 39.30 | 39.30 |
| PC-2 | 46.20 | 46.20 | 34.65 | 23.10 | 23.10 | 11.55 | ---- |
| PEC-2 | ---- | ---- | 11.55 | 23.10 | ---- | 34.65 | 46.2 |
| PEC-1 | ---- | ---- | ---- | ---- | 23.10 | ---- | ---- |
| MBS | 14.00 | 14.00 | 14.00 | 14.00 | 14.00 | 14.00 | 14.00 |
| Stabilizers etc.* | 0.50 | 0.50 | 0.50 | 0.50 | 0.50 | 0.50 | 0.50 |
| | | | | | | | |

| Properties | | | | | | | |
|---|---|---|---|---|---|---|---|
| Tg** (°C) | 142 | 150 | 154 | 157 | 163 | 162 | 157 |
| Estimated HDT @ (264 psi) (°C)* (1820 kPa) | 94 | 118 | 111 | 109 | 109 | 108 | 104 |
| Estimated HDT @ (66 psi) (°C)** (455 kPa) | 136 | 150 | 152 | 155 | 157 | 154 | 141 |
| D/B temperature (°C) | -60 | -60 | < -60 | -60 | -55 | -55 | -50 |
| Dynatup @ -50°C max. load (ft.lb.) Nm | (42) 57 | (47) 64 | (44) 60 | (42) 57 | (49) 66 | (38) 51 | (40) 54 |
| Dynatup @ -50°C total energy (ft.lb.) Nm | (52) 71 | (50) 68 | (46) 62 | (44) 60 | (51) 69 | (41) 56 | (42) 57 |
| Tensile Strength (psi) kPa | (6,300) 43437 | (6,400) 44126 | (6,100) 42058 | (6,500) 44816 | (6,200) 42748 | (6,200) 42748 | (6,500) 44816 |
| Tensile Elongation (%) | 96 | 72 | 54 | 71 | 62 | 62 | 63 |
| Flexural Strength (psi) kPa | (10,300) 71016 | (9,700) 66879 | (9,700) 66879 | (10,000) 68948 | (9,900) 68258 | (10,000) 68948 | (10,200) 70327 |
| Flexural Modulus (psi) kPa | (230,300) 1587863 | (211,100) 1455483 | (207,300) 1429283 | (212,100) 1462378 | (204,800) 1412046 | (190,000) 1310004 | (182,600) 1258983 |

| | | | | | | | |
|---|---|---|---|---|---|---|---|
| *Temperature at which the storage modulus determined from dynamic mechanical analysis using a heating rate of 3°C/ minute was 10^{8.9} Pascals. | | | | | | | |
| **Temperature at which the storage modulus determined from dynamic mechanical analysis using a heating rate of 3°C/minute was 10^{8.3} Pascals. | | | | | | | |

Table IV shows that the PEN/PEC-1 blend (E8) possesses higher HDT than the PEN/PC blend (R7). In addition, the appearance of the PEN/PEC-1 blend is much better than the PEN/PC blend. The PEN/PC blend has a pearlescent appearance; while the PEN/PEC-1 blend has a uniform, nonpearlescent appearance.

**Table IV.**

| **PEN/PEC-1 blends**. | | |
|---|---|---|
| Raw Materials | R7 | E8 |
| PEN | 42.40 | 42.40 |
| PC-2 | 45.87 | ---- |
| PEC-1 | ---- | 45.87 |
| MBS | 11.00 | 11.00 |
| Stabilizers etc.* | 0.73 | 0.73 |
| | | |

| Properties | | |
|---|---|---|
| HDT @ (66 psi) (°C) (455 kPa) | 128 | 141 |
| HDT @ (264 psi) (°C) 1820 kPa | 107 | 123 |
| Tensile Strength (psi) kPa | (6800) 46884 | (6800) 46884 |
| Tensile Elongation (%) | 40 | 16 |
| Flexural Modulus (psi) kPa | (257,000) 1771953 | (248,500) 1713347 |
| Flexural Strength (psi) kPa | (11,600) 79979 | (11,900) 82047 |

| | | |
|---|---|---|
| *as in Table II | | |

Table V shows that E9 has higher HDT, tensile strength, flexural modulus, and flexural strength than R8.

**Table V.**

| **PEN/PC/PEC-1 ternary blends.** | | |
|---|---|---|
| Raw Materials | R8 | E9 |
| PET | 48.40 | ---- |
| PEN | ---- | 48.40 |
| PC-3 | 22.94 | 22.94 |
| PEC-1 | 22.94 | 22.94 |
| MBS | 11.00 | 11.00 |
| Stabilizers* | 0.73 | 0.73 |
| | | |

| Properties | | |
|---|---|---|
| HDT @ (66 psi) (°C) 455 kPa | 122 | 133 |
| HDT @ (264 psi) (°C) 1820 kPa | 77 | 109 |
| Tensile Strength (psi) kPa | (5,400) 37232 | (6,700) 46195 |
| Tensile Elongation (%) | 32 | 24 |
| Flexural Modulus (psi) kPa | (246,100) 1696800 | (258,300) 1780196 |
| Flexural Strength (psi) kPa | (10,400) 71705 | (11,700) 80669 |

| | | |
|---|---|---|
| *as in Table II | | |

## Claims

1. A thermoplastic resin composition comprising:
a) 90 to 10 weight percent of an alkylene polyester naphthanoate containing recurring units of the formula I: 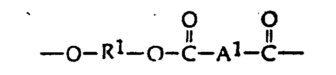 wherein each R¹ is independently a divalent aliphatic hydrocarbon, alicyclic hydrocarbon polyoxyalkylene radical, or mixtures thereof and each A¹ is independently a divalent naphthalene radical, or mixtures thereof;
b) 10 to 90 weight percent of an essentially amorphous polymer containing recurring units of the formula II: 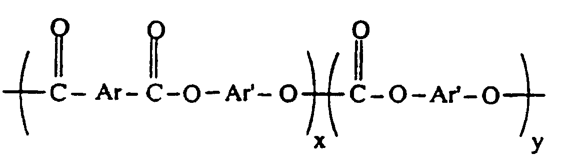 wherein Ar is divalent aromatic residue of a dicarboxylic acid or mixture of dicarboxylic acids and Ar' is the divalent aromatic residue of a dihydric phenol or mixture of dihydric phenols and x and y are relative weight percentages of the ester and carbonate units, wherein x is from 20 to 100 and y is from 0 to 80; and
c) a quencher selected from the group consisting of phosphites having an acidic OH group, acidic phosphate salts, polyacid pyrophosphates, phosphates of Group IB and Group IIB metals, and phosphorus oxo-acids.

2. A thermoplastic resin composition of claim 1 wherein said composition further comprises a polycarbonate resin having recurring units of formula II where x = 0.

3. A thermoplastic resin composition of claim 2 wherein said composition comprises from 10 to 40 percent by weight of a polycarbonate resin having recurring units of formula II where x = 0.

4. A thermoplastic resin composition of any preceding claim wherein Ar' of formula II is derived from the aromatic residue of bisphenol A as the dihydric phenol component.

5. A thermoplastic resin composition of claim 1 wherein Ar of formula II is derived from the aromatic residue of isophthalic acid, terephthalic acid or a mixture thereof.

6. A thermoplastic resin composition of claim 1 wherein the polyester naphthanoate of formula I is a polyalkylene naphthanoate wherein A¹ is the residue from a diacid component 2,6-naphthanoic acid and derivatives thereof and R¹ is the residue from a diol component selected from the group consisting essentially of ethylene glycol, propanediol, butanediol, or cyclohexanedimethanol, and derivatives thereof.

7. A thermoplastic resin composition of any preceding claim wherein said composition further comprises a rubbery impact modifier which is a graft copolymer comprising a rubbery substrate and a rigid polymeric graft or shell.

8. A thermoplastic resin composition of claim 7 wherein said graft copolymer is selected from methylmethacrylate-butadiene-styrene graft copolymers and acrylonitrile-butadiene-styrene graft copolymers.

9. A thermoplastic resin composition of claim 1 wherein polyester naphthanoate of formula I comprises from 10 to 90 percent, the amorphous PEC resin of formula II comprises from 90 to 10 percent by weight, said amorphous PEC thermoplastic resin including from 0 to 60 percent by weight polycarbonate, from 0 to 25 percent by weight of a rubbery impact modifier, from 0 to 60 percent by weight of a glass or mineral filler material, and from 0.005 to 2.0 weight percent of a quencher.

10. A thermoplastic resin composition of claim 1 wherein polyester naphthanoate of formula I comprises from 20 to 60 percent and the amorphous PEC resin of formula II comprises from 20 to 60 percent by weight wherein said weight percent is based on the total weight of said thermoplastic resin.

## Patentansprüche

1. Eine thermoplastische Harzzusammensetzung umfassend:
a) 90 bis 10 Gew.-% eines Alkylenpolyestemaphthanoats enthaltend wiederkehrende Einheiten der Formel I: 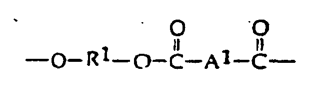 worin jedes R¹ unabhängig ein divalenter aliphatischer Kohlenwasserstoff, alizyklischer Kohlenwasserstoff, Polyoxyalkylenrest, oder Mischungen daraus ist und jedes A¹ unabhängig ein divalenter Naphthalinrest, oder Mischungen daraus ist;
b) 10 bis 90 Gew.-% eines im wesentlichen amorphen Polymers enthaltend wiederkehrende Einheiten der Formel II: 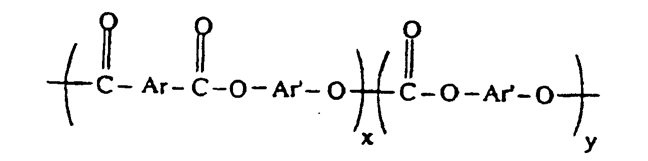 worin Ar ein divalenter aromatischer Rest einer Dicarbonsäure oder eine Mischung von Dicarbonsäuren ist und Ar' ein divalenter aromatischer Rest eines zweiwertigen Phenols oder eine Mischung von zweiwertigen Phenolen ist und x und y relative Gew.-% der Ester- und Carbonateinheiten sind, wobei x zwischen 20 und 100 und y zwischen 0 und 80 ist; und
c) ein Quencher ausgewählt aus der Gruppe bestehend aus Phosphiten mit einer sauren OH Gruppe, saure Phosphatsalze, Polysäurepyrophosphate, Phosphate der Gruppe IB- und Gruppe IIB-Metalle, und Phosphoroxosäuren.

2. Thermoplastische Harzzusammensetzung nach Anspruch 1, **dadurch gekennzeichnet, dass** die Zusammensetzung weiterhin ein Polycarbonatharz aufweist, das wiederkehrende Einheiten der Formel II hat, worin x = 0.

3. Thermoplastische Harzzusammensetzung nach Anspruch 2, **dadurch gekennzeichnet, dass** die Zusammensetzung 10 bis 40 Gew.-% eines Polycarbonatharzes aufweist mit wiederkehrenden Einheiten der Formel II worin x = 0.

4. Thermoplastische Harzzusammensetzung nach einem der vorhergehenden Ansprüche, **dadurch gekennzeichnet, dass** sich Ar' aus Formel II vom aromatischen Rest des Bisphenol A als der zweiwertigen Phenolkomponente ableitet.

5. Thermoplastische Harzzusammensetzung nach Anspruch 1, **dadurch gekennzeichnet, dass** sich Ar der Formel II vom aromatischen Rest der Isophthalsäure, Terephthalsäure oder Mischungen davon ableitet.

6. Thermoplastische Harzzusammensetzung nach Anspruch 1, **dadurch gekennzeichnet, dass** das Polyestemaphthanoat der Formel I ein Polyalkylennaphthanoat ist, worin A¹ der Rest einer Disäurekomponente 2,6-Naphthalinsäure und Derivaten davon ist und R¹ der Rest einer Diolkomponente ist, ausgewählt aus der Gruppe bestehend im wesentlichen aus Ethylenglykol, Propandiol, Butandiol oder Cycolhexandimethanol und Derivaten davon.

7. Thermoplastische Harzzusammensetzung nach einem der vorhergehenden Ansprüche, **dadurch gekennzeichnet, dass** die Zusammensetzung weiterhin einen kautschukartigen Schlagzähmodifizierer umfasst, bei dem es sich um ein Pfropfcopolymer handelt umfassend ein kautschukartiges Substrat und einen steifen Polymerpfropf oder eine steife Polymerschale.

8. Thermoplastische Harzzusammensetzung nach Anspruch 7, **dadurch gekennzeichnet, dass** das Pfropfcopolymer ausgewählt ist aus Methylmethacrylatbutadien-styrolpfropfcopolymeren und Acrylnitril-butadienstyrolpfropfcopolymeren.

9. Thermoplastische Harzzusammensetzung nach Anspruch 1, **dadurch gekennzeichnet, dass** das Polyesternaphthanoat der Formel I 10 bis 90 % ausmacht, das amorphe PEC Harz der Formel II 90 bis 10 Gew.-% ausmacht, wobei das thermoplastische amorphe PEC Harz 0 bis 60 Gew.-% Polycarbonat einschließt, 0 bis 25 Gew.-% des kautschukartigen Schlagzähmodifizierers, 0 bis 60 Gew.-% eines glasartigen oder mineralischen Füllstoffmaterials und 0,005 bis 2,0 Gew.-% eines Quenchers.

10. Thermoplastische Harzzusammensetzung nach Anspruch 1, **dadurch gekennzeichnet, dass** das Polyestemaphthanoat der Formel I 20 bis 60 % ausmacht und das amorphe PEC Harz der Formel II 20 bis 60 Gew.-% ausmacht, wobei die Gew.-% auf das Gesamtgewicht des thermoplastischen Harzes bezogen sind.

## Revendications

1. Composition de résine thermoplastique comprenant :
a) 90 à 10 % en poids d'un polyester poly(alkylène naphtanoate) comportant des motifs répétés de formule 1 : 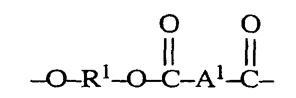 dans laquelle chaque symbole R¹ représente indépendamment un reste divalent d'hydrocarbure aliphatique ou alicyclique ou un reste polyoxyalkylène, ou des combinaisons de tels restes, et chaque symbole A¹ représente indépendamment un reste divalent de naphtalène, ou des combinaisons de tels restes ;
b) 10 à 90 % en poids d'un polymère pratiquement amorphe, comportant des motifs répétés de formule II : 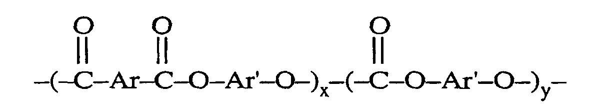 dans laquelle Ar représente un reste aromatique divalent d'un acide dicarboxylique ou d'une combinaison d'acides dicarboxyliques, Ar' représente un reste aromatique divalent d'un diphénol ou d'une combinaison de diphénols, et x et y, qui représentent les pourcentages pondéraux relatifs de motifs ester et carbonate, valent respectivement de 20 à 100 et de 0 à 80 ;
c) et un stabilisant choisi dans l'ensemble constitué par les phosphites comportant un groupe hydroxyle acide, les sels phosphates acides, les pyrophosphates polyacides, les phosphates des métaux des groupes IB et IIB, et les oxo-acides dérivés du phosphore.

2. Composition de résine thermoplastique, conforme à la revendication 1, laquelle composition comprend en outre une résine polycarbonate constituée de motifs répétés de formule II où x vaut 0.

3. Composition de résine thermoplastique, conforme à la revendication 2, laquelle composition comprend de 10 à 40 % en poids d'une résine polycarbonate constituée de motifs répétés de formule II où x vaut 0.

4. Composition de résine thermoplastique, conforme à l'une des revendications précédentes, dans laquelle Ar', dans la formule II, représente le reste aromatique de bisphénol A, en tant que composant diphénolique.

5. Composition de résine thermoplastique, conforme à la revendication 1, dans laquelle Ar, dans la formule II, représente le reste aromatique d'acide isophtalique ou d'acide téréphtalique, ou une combinaison de tels restes.

6. Composition de résine thermoplastique, conforme à la revendication 1, dans laquelle le polyester polynaphtanoate de formule I est un poly(alkylène naphtanoate) où A¹ représente le reste d'un composant diacide qui est l'acide 2,6-naphtanoïque ou l'un de ses dérivés, et R¹ représente le reste d'un composant diol choisi dans l'ensemble comprenant essentiellement l'éthylèneglycol, le propanediol, le butanediol et le cyclohexane-diméthanol, ainsi que leurs dérivés.

7. Composition de résine thermoplastique, conforme à l'une des revendications précédentes, laquelle composition comprend en outre un agent caoutchouteux modifiant la résistance au choc, qui est un copolymère de greffage comprenant un substrat caoutchouteux et une coque ou greffe polymère rigide.

8. Composition de résine thermoplastique, conforme à la revendication 7, dans laquelle ledit copolymère de greffage est choisi parmi les copolymères de greffage (méthacrylate de méthyle)-butadiène-styrène et les copolymères de greffage acrylonitrile-butadiène-styrène.

9. Composition de résine thermoplastique, conforme à la revendication 1, dont le polyester polynaphtanoate de formule I constitue de 10 à 90 % et la résine polyester-carbonate amorphe de formule II constitue de 90 à 10 % en poids, cette résine thermoplastique polyester-carbonate amorphe contenant de 0 à 60 % en poids de polycarbonate, de 0 à 25 % en poids d'agent caoutchouteux modifiant la résistance au choc, de 0 à 60 % en poids d'une charge de verre ou d'un matériau minéral, et de 0,005 à 2,0 % en poids d'un stabilisant.

10. Composition de résine thermoplastique, conforme à la revendication 1, dont le polyester polynaphtanoate de formule I constitue de 20 à 60 % et la résine polyester-carbonate amorphe de formule II constitue de 20 à 60 % en poids, ces pourcentages pondéraux étant rapportés au poids total de ladite résine thermoplastique.
